# EUROPÄISCHE PATENTANMELDUNG

(11) **EP 1 342 745 A1**
(43) Veröffentlichungstag der Anmeldung: **10.09.2003**
(21) Anmeldenummer: 02004932.6
(22) Anmeldetag: 05.03.2002
(51) Int. Cl.: C08J 5/18

(54) **Verfahren zur Herstellung von Polyolefinfolien**

(71) Anmelder: Lofo High Tech Film GmbH, 79576 Weil am Rhein (DE)
(72) Erfinder: Die Erfindernennung liegt noch nicht vor
(74) Vertreter: Riegler, Norbert Hermann

(57) **Zusammenfassung**

Optische Folien aus Polyolefinen der Formel 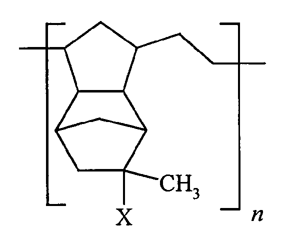 worin X eine polare Gruppe, und *n* eine Zahl von 10 bis 1000 ist, werden durch Giessen von Dichlormethanlösungen auf eine glatte Unterlage und Verdampfen des Lösungsmittels unter kontrollierten Bedingungen hergestellt. Die Folien zeichnen sich durch besonders geringe optische Verzögerung (optical retardation) aus.

## Beschreibung

Die Erfindung betrifft ein Verfahren zur Herstellung von Polyolefinfolien durch Giessen einer Polymerlösung auf eine Unterlage.
Sie betrifft insbesondere ein Verfahren zur Herstellung von optischen Folien aus Polyolefinen der Formel 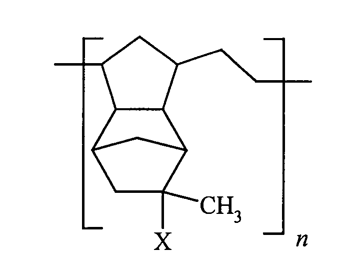 worin X eine polare Gruppe und *n* eine Zahl von 10 bis 1000 ist, durch Giessen von Lösungen der Polyolefine in organischen Lösungsmitteln auf eine Unterlage und Verdampfen der Lösungsmittel.

Polyolefine der obenstehenden Formel sind bekannt für ihre guten optischen Eigenschaften und beispielsweise unter dem Namen Arton® (X = Methoxycarbonyl, Hersteller: Japan Synthetic Rubber Co.) im Handel. Für verschiedene Anwendungen ist es erforderlich, optische Folien aus diesem Material herzustellen, die neben einer konstanten Dicke eine glatte und fehlerfeie Oberfläche aufweisen und frei von Schlieren sind und insbesondere eine möglichst geringe optische Verzögerung (optical retardation) aufweisen. Diese Kombination von Eigenschaften kann, wenn überhaupt, nur durch ein Giessverfahren erzielt werden, bei dem eine Lösung des Polymeren auf eine Unterlage gegossen und durch Verdampfen des Lösungsmittels verfestigt und schliesslich als Folie von der Unterlage abgezogen wird. Es hat sich jedoch gezeigt, dass bei Anwendung von bei der Herstellung anderer optischer Folien (z. B. aus Cellulosetriacetat) nach dem Giessverfahren üblichen Bedingungen die so erhaltenen Folien nicht allen Anforderungen genügen.

Aufgabe der vorliegenden Erfindung war daher die Bereitstellung eines Herstellungsverfahrens für optische Folien aus den oben genannten Polyolefinen, welches insbesondere Folien mit extrem geringer optischer Verzögerung liefert.

Erfindungsgemäss wird diese Aufgabe durch das Verfahren nach Patentanspruch 1 gelöst.

Es wurde gefunden, dass Folien sehr geringer optischer Verzögerung aus einem Polyolefin der Formel 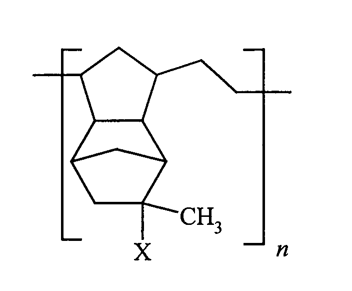 worin X eine polare Gruppe, und n eine Zahl von 10 bis 1000 ist, durch Giessen einer Lösung des Polyolefins in einem organischen Lösungsmittel auf eine Unterlage und Verdampfen des Lösungsmittels hergestellt werden können, wenn
(i) das Polyolefin in Dichlormethan oder einem Dichlormethan enthaltenden Lösungsmittelgemisch gelöst und
(ii) die so erhaltene Lösung in einer wenigstens 1 Vol.% Dichlormethandampf enthaltenden Atmosphäre bei einer Temperatur von nicht mehr als 35 °C auf eine glatte Unterlage gegossen wird, wobei eine im wesentlichen laminare Gasströmung über der Giessunterlage aufrechterhalten wird,
(iii) das Lösungsmittel bis zum Erhalt einer selbsttragenden Folie verdampft und
(iv) die Folie von der Unterlage abgezogen und bei einer bis auf 70 bis 120 °C steigenden Temperatur getrocknet wird, ohne sie dabei zu verstrecken.

Als Dichlormethan enthaltende Lösungsmittelgemische können Gemische von Dichlormethan mit anderen leicht verdampfbaren Lösungsmitteln wie beispielsweise Methanol eingesetzt werden, wobei das Dichlormethan zweckmässig den Hauptbestandteil darstellt.

Als Giessunterlage wird vorteilhaft ein umlaufendes poliertes Band, beispielsweise aus Edelstahl, eingesetzt. Die im wesentlichen laminare Gasströmung wird vorteilhaft dadurch erreicht, dass dichlormethanhaltiges Gas (vorzugsweise Luft) in der Nähe des Giessspaltes so zugeführt wird, dass sich das Gas in der gleichen Richtung wie die Giessunterlage fortbewegt und die Relativgeschwindigkeit zwischen Gas und Unterlage gering oder gleich Null ist. Im kontinuierlichen Betrieb wird das dichlormethanhaltige Gas vorteilhaft am Ende der Trocknungszone abgezogen und über einen Kondensator rezykliert. Der Dichlormethangehalt kann so auf einfache Weise durch Änderung der Kondensatortemperatur entsprechend der Dampfdruckkurve eingestellt und das kondensierte Dichlormethan zurückgewonnen werden.

Vorzugsweise werden nach dem erfindungsgemässen Verfahren Folien aus Polyolefinen der obenstehenden Formel hergestellt, in welchen X eine C₁₋₄-Alkoxycarbonylgruppe ist.

Besonders bevorzugt sind solche Polyolefine, in denen X eine Methoxycarbonylgruppe ist.

Die Konzentration des Polyolefins in der Giesslösung beträgt vorzugsweise 10 bis 36 Gew.%, besonders bevorzugt 20 bis 30 Gew.%.

Die Dicke der erfindungsgemäss herstellbaren Folien beträgt vorzugsweise 50 bis 200 µm. Nach dem erfindungsgemässen Verfahren können Folien mit einer optischen Verzögerung von weniger als 10 nm bei 100 µm Dicke und einer Variation der optischen Verzögerung in Längs- und Querrichtung von nur ca. ±1 nm (bei 100 µm Dicke) hergestellt werden.

Zur Erzielung eines besonders geringen Restgehaltes an Lösungsmittel («1%) kann die Folie gegebenenfalls einem zweiten Trocknungsprozess unter im wesentlichen gleichen Temperaturbedingungen, aber vorteilhaft mit geringerer Geschwindigkeit, unterworfen werden.

Die folgenden Beispiele verdeutlichen die Durchführung des erfindungsgemässen Verfahrens, ohne dass darin eine Einschränkung zu sehen ist.

### Beispiel 1

**Herstellung einer Giessfolie aus ARTON® G mit einer Dicke von 100 µm**

Aus 5000 kg ARTON® G und 13182 kg Dichlormethan wurde unter Rühren und leichtem Erwärmen eine homogene Lösung hergestellt und durch ein aus einer Lage Kalmuk-Gewebe, einem Metallsieb mit 12 µm Maschenweite und einer Lage Baumwollbatist zusammengesetztes Filter in einer Filterpresse filtriert. Die filtrierte Lösung wurde zur Entgasung auf 40 °C erwärmt und dann auf 33 °C temperiert und unter einer Atmosphäre mit einem Gehalt von ca. 3 Vol.% Dichlormethandampf und einer Temperatur von 34 °C in der erforderlichen Dicke (Giessspalt ca. 200 µm) auf ein mit 3,6 m/min umlaufendes poliertes endloses Stahlband von 60 m Länge und ca. 1,27 m Breite gegossen. Die Dichlormethan enthaltende Luft wurde im Bereich des Giessspaltes so zugeführt, dass eine lineare Gasgeschwindigkeit in Bandrichtung von ca. 2-5 m/s (entsprechend einer Relativgeschwindigkeit von ca. ±1,5 m/s) resultierte. Die Temperatur im Bandkanal wurde zur Abnahmestelle hin stufenweise auf ca. 60 °C erhöht und die gebildete Folie abgezogen. Diese wurde anschliessend über eine Länge von ca. 260 m bei stufenweise von ca. 60 °C im Bereich der ersten 120 m Länge bis auf ca. 115 °C im letzten Drittel ansteigender Temperatur getrocknet und schliesslich nach dem Abkühlen auf 1010 mm Breite beschnitten und aufgewickelt.
Nach Einstellung eines stationären Betriebszustandes wurde eine Folie mit einem Lösungsmittelrestgehalt von ca. 1,45 Gew.% und einer optischen Verzögerung von ca. 10 nm erhalten.

### Beispiel 2

### Herstellung einer Giessfolie aus ARTON® G mit einer Dicke von 100 µm

Analog zu Beispiel 1 wurde aus 3840 kg ARTON® G und 8939 kg Dichlormethan eine Lösung hergestellt und mit einer Bandgeschwindigkeit von 4,9 m/min vergossen. Die so erhaltene Folie mit einem Lösungsmittelrestgehalt von 1,34 Gew.%, einer optischen Verzögerung von 9 nm und einer Trübung von 0,27% wurde zunächst aufgewickelt und später in einem Durchlauftrockenschrank bei einer Temperatur von 125-132 °C über eine Länge von 121 m mit einer Geschwindigkeit von 2 m/min nachgetrocknet. Nach dieser Nachtrocknung betrug der Lösungsmittelrestgehalt 0,08 Gew.% und die optische Verzögerung 9,5 nm. Die Trübung war geringfügig auf 0,45% angestiegen.

## Patentansprüche

1. Verfahren zur Herstellung einer optischen Folie aus einem Polyolefin der Formel 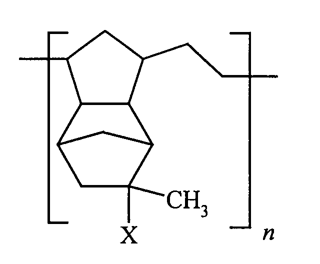 worin X eine polare Gruppe und *n* eine Zahl von 10 bis 1000 ist, durch Giessen einer Lösung des Polyolefins in einem organischen Lösungsmittel auf eine Unterlage und Verdampfen des Lösungsmittels, **dadurch gekennzeichnet, dass** sie die Schritte
(i) Lösen des Polyolefins in Dichlormethan oder einem Dichlormethan enthaltenden Lösungsmittelgemisch,
(ii) Giessen der Lösung in einer wenigstens 1 Vol.% Dichlormethandampf enthaltenden Atmosphäre bei einer Temperatur von nicht mehr als 35 °C auf eine glatte Unterlage bei im wesentlichen laminarer Gasströmung,
(iii) Verdampfen des Lösungsmittels bis zum Erhalt einer selbsttragenden Folie und
(iv) Abziehen der Folie von der Unterlage und Trocknen bei einer bis auf 70 bis 120 °C steigenden Temperatur, ohne die Folie dabei zu verstrecken, umfasst.

2. Verfahren nach Anspruch 1, **dadurch gekennzeichnet, dass** X eine C₁₋₄-Alkoxycarbonylgruppe ist.

3. Verfahren nach Anspruch 2, **dadurch gekennzeichnet, dass** X eine Methoxycarbonylgruppe ist.

4. Verfahren nach einem der Ansprüche 1 bis 3, **dadurch gekennzeichnet, dass** die Konzentration des Polyolefins in der Giesslösung 20 bis 30 Gew.% beträgt.

5. Verfahren nach einem der Ansprüche 1 bis 4, **dadurch gekennzeichnet, dass** die Dicke der hergestellten Folie 50 bis 200 µm beträgt.
